# EUROPEAN PATENT SPECIFICATION

(11) **EP 3 767 147 B1**
(45) Date of publication and mention of the grant of the patent: **01.03.2023**
(21) Application number: 20185926.1
(22) Date of filing: 15.07.2020
(51) Int. Cl.: F16L 37/091, B32B 1/00, B60T 1/00

(54) **PNEUMATIC FUNCTION UNIT PROVIDED WITH A SEAT FOR RELEASABLY RETAINING FLEXIBLE OR SEMI-RIGID TUBES**
PNEUMATISCHE FUNKTIONSEINHEIT MIT EINEM SITZ ZUM LÖSBAREN HALTEN VON FLEXIBLEN ODER HALBSTARREN ROHREN
UNITÉ DE FONCTION PNEUMATIQUE DOTÉE D'UN SIÈGE POUR RETENIR DE FAÇON AMOVIBLE DES TUBES SEMI-RIGIDES OU SOUPLES

(30) Priority: 16.07.2019 IT 201900011874
(43) Date of publication of application: 20.01.2021
(73) Proprietor: Pneumax S.p.A., 20129 Milan (IT)
(72) Inventor: BOTTACINI, Rossella, 20129 Milano (IT)
(74) Representative: Mati, Silvia

(56) References cited:
- EP-A1- 3 023 680
- DE-U1-202012 102 342
- DE-U1-202015 103 725
- FR-A1- 2 758 379
- GB-A- 2 360 073
- US-A1- 2009 160 179

## Description

### TECHNICAL FIELD

The present invention generally relates to pneumatic functional units provided with releasable retaining seat for flexible or semi-rigid tubes usually used in pneumatic systems.

In the present description and in the appended claims, "functional unit" means a unit belonging to the set of devices used in pneumatic systems and which have at least one air inlet or outlet port, for the releasable connection to a flexible or semi-rigid tube. For example, pneumatic cylinders, manifolds for pneumatic systems, distributors for pneumatic systems, connection devices and so on are considered functional units within the meaning of said patent.

With particular reference to the connection devices currently used in pneumatic systems, they typically have a retaining seat comprising an elastic metal ring provided with a plurality of protrusions inclined with respect to the plane of the ring and facing radially towards the centre of the ring. Through an external ring nut it is possible to act on the protrusions to bring them into a condition of substantial coplanarity with the plane defined by the ring and therefore of maximum radial protrusion. In this condition, the protruding teeth engage with a tube inserted in the fitting, holding it in position. An example of such a fitting is described in detail in U.S. Pat. no. US 3,837,687.

Fittings of the type described in U.S. Pat. no. US 4,228,113 which also make use of a retaining seat comprising an elastic metal ring provided with a plurality of protrusions facing radially towards the centre of the ring are also known. It is also provided for a tubular element inserted in the mouth of the fitting in a coaxial and movable manner between two end positions for extracting the tube. By bringing the tubular element into its position of maximum insertion, this acts on the radial protrusions to deform them and therefore disengage them from the tube, in order to allow their extraction.

The Applicant has highlighted that the known fittings do not offer optimal performance if they are used with multilayer tubes, that is tubes with a multilayer sheath. Multilayer tubes are typically used in applications where the working environment is such as to be able to damage the tube itself, such as for example in applications where welding operations take place. The additional sheath acts in this case as a protection of the inner tube.

Among the known multilayer tubes, reference is made, by way of example, to tubes with an intermediate aluminium sheath which are used in particular for applications requiring high flexibility of the tube. The tubes with an intermediate aluminium sheath are typically used to supply compressed air to the equipment positioned at the end of a robotic arm, requiring the supply tube to follow the movement imposed on the equipment along articulated paths and which may possibly cause a strong curvature of the tube.

The Applicant has observed that, for dimensional reasons, the insertion of the multilayer tubes in the releasable retaining seats of the pneumatic functional units of the known type requires at least part of the outer sheath to be removed. This typically causes the transition between the outer sheath and the inner sheath to remain external to the retaining seat, allowing the dirt to partially penetrate said seats. The fouling of the retaining seats is in turn a cause of deterioration of the tubes, in particular in work environments where, among other things, welding operations take place. Under said conditions, it is in fact difficult to prevent welding residues from penetrating the seat, damaging the inner sheath of the tube or forming a constraint which hinders the extraction thereof. Furthermore, said fouling can compromise the movement of the tubular element inside the functional unit if the welding residues penetrate the gap between the retaining seat and the tubular element. The Applicant has also highlighted that, in the condition in which the tube results to be retained in retaining seats of the known type, with only the innermost sheath inserted, the accidental detachment of the tube due to the stresses generated by the bending of the tube is frequent, the latter caused by the movement of the pneumatic functional unit to which the tube is connected. These stresses also cause an undesired movement of the tubular element, which, acting on the elastic holding protrusions, can be the cause of an involuntary release of the retained tube. The need for a reduction or, even better, for a substantial elimination of accidental movements of the tubular element is therefore strongly felt.

The Applicant therefore perceived the need to improve the releasable retaining seats of the pneumatic functional units, so that these units were able to offer a high degree of protection from the external environment and reliability in terms of reliability both in operation and in holding the end of the tube, in particular in the event of significant movement of the functional unit and strong stresses on the end of the tube.

Document DE 20 2015 103725 U describes a fitting for the connection of a compressed air multilayer pipe equipped with a release element housed in the fitting coaxially thereto. The release element internally defines a housing compartment constituted by a first section with a larger diameter, placed close to the inlet opening of the fitting, and a second section with a smaller diameter, placed more internally to the fitting. The section of the release element which defines the larger diameter compartment has a protrusion extending externally from the release element. In the condition of maximum projection from the body of the fitting, the protrusion cooperates with a counter protrusion which acts as a stroke limiting element. Documents DE 20 2012 102342 U, GB 2 360 073 and US 2009/160179 disclose fittings with a release element which defines a housing compartment internally having just one section with a constant diameter, thereby being configured to receive single layer tubes.

### OBJECTS AND SUMMARY OF THE INVENTION

In light of the above, the problem underlying the present invention is that of devising a pneumatic functional unit capable of overcoming the drawbacks of the prior art.

Within the scope of this problem, an object of the present invention is that of providing a pneumatic functional unit capable of preventing the fouling of the retaining seats of the pneumatic tubes even when used in association with multilayer tubes.

Another object of the present invention is that of providing a pneumatic functional unit which is able to guarantee a good holding of multilayer tubes even under conditions of use which cause a strong bending of the tubes near the connection to the unit.

According to a first aspect thereof, the invention therefore relates to a pneumatic functional unit according to claim 1.

The Applicant has identified that thanks to the particular internal geometry of the release element, which internally defines two compartments with different diameters, it is possible to house and therefore also protect the transition interface between a first section in which the outermost sheath has been removed and a second section, directly following the first one, in which the outermost sheath has not been removed.

In this way it is advantageously possible to prevent, even in the case of use in environments particularly subject to fouling, such as for example for use in association with arc welding, residues of dirt (e.g. welding) from penetrating the retaining seat, damaging or blocking the tube inside it permanently.

On the other hand, the particular geometry studied by the Applicant ensures a good holding of multilayer tubes even under conditions of use which cause a strong bending of the tubes near the connection to the unit.

The present invention may have at least one of the preferred following features; the latter may in particular be combined with one another as desired in order to meet specific application needs.

The retaining seat is shaped in such a way as to internally define a first seat portion having a first seat diameter and at least a second seat portion having a second seat diameter, smaller than the first seat diameter, at the first section having greater first compartment diameter, the tubular release element presenting a segment having an external diameter substantially corresponding to the first seat diameter, where in its partially extracted rest position, the segment overlaps the first seat portion over a first depth.

In a variant of the invention, the second seat portion with a second seat diameter, smaller than the first seat diameter is defined inside a shaped tubular insert inserted in a longitudinal channel portion of the housing body which extends along the development axis.

At the first section having greater first compartment diameter, the tubular release element has a segment having an external diameter substantially corresponding to an external diameter of the shaped tubular insert, where in its partially extracted rest position, the segment overlaps the first seat portion over a first depth.

The first depth of overlap between the segment and the first seat portion is equal to at least 50% of the axial extension x1 of the segment, preferably equal to at least 60% of the extension x1 of the segment.

Preferably, the overlap depth is equal at least to 3 mm, it is more preferably comprised between 3 mm and 5 mm, even more preferably it is comprised between 3.5 mm and 4.5 mm.

The Applicant has identified that, by suitably sizing the seat, it allows to reliably hold the end of the tube inside the same even in case of use that involves a strong bending of the tube inserted in it.

In a variant of the invention, the second seat portion comprises a second depth, where the ratio between the first depth and the second depth is comprised between 0.2 < p1/p2 0.3, preferably between 0.21 < p1/p2 < 0.29, more preferably 0.22 < p1/p2 < 0.28.

The Applicant has identified that, the suitably sizing the depth of the first seat portion with respect to the depth of the second seat portion allows inserting a section of tube (including the end without external sheath and a portion of the subsequent section with not removed external sheath) that is sufficient both to effectively prevent fouling the end of the tube without external sheath, and at the same time a reliable retention of the section of the tube inside the same.

In a variant of the invention, the elastic holding means are made in the form of an annular element provided with a plurality of teeth protruding radially towards the centre of the annular element itself.

In a variant of the invention, the elastic holding means are carried by a support ring inserted in the retaining seat.

This expedient makes realising and implementing the retaining seat particularly easy.

Preferably, the support ring rests on a sealing element included in the retaining seat, the sealing element resting on an annular recess of the retaining seat provided near the bottom of the seat.

In a variant, the support ring defines a frustoconical mouth.

Advantageously, the frustoconical end defines a limit to the deformation of the elastic holding means, ensuring their elastic return to the unstressed position, in the absence of stresses.

According to an embodiment, inside the retaining seat it is provided for a locking sleeve placed above the elastic holding means and configured to fix the elastic holding means in position.

Preferably, the locking sleeve comprises an annular stop protruding radially towards the inside of the retaining seat, the annular stop cooperating with a collar portion of the tubular release element to define the rest position, partially extracted from the seat, of the release element.

According to a further variant, the at least one tubular release element defines an inlet mouth at a first end thereof proximal to the insertion opening, the inlet mouth of the tubular release element comprising an annular skirt-like portion configured for providing a perimeter cover of the insertion opening, defining a guide seat in which a portion of the housing body surrounding the insertion opening is free to slide.

Preferably, the skirt-like portion has an extension along the development axis equal to at least the overlap depth between the segment and the first seat portion, more preferably equal to at least twice the overlap depth.

Advantageously, the skirt-like portion acts both as a stop end with respect to an insertion movement of the tubular release element inside the seat, abutting against the free end of the seat, and as a further stabilizing element with respect to important bendings of the multilayer tube.

According to another variant, at least at least one scraping element acts between the at least one tubular release element and the housing body, which scraping element is positioned so as to exert a scraping action on a portion of the interface wall for the reciprocal sliding between the at least one tubular release element and the housing body.

Preferably, the scraping element is carried by the housing body substantially at the insertion opening.

Alternatively, the scraping element is carried by the skirt-like portion and placed substantially at the free end of the skirt-like portion.

Advantageously, the action of the scraping element guarantees a high operating reliability of the pneumatic functional unit, ensuring the possibility of activating the tubular element so as to release an inserted tube even when used in high-fouling work environments.

In a variant of the invention, the pneumatic functional unit is selected from a group comprising a pneumatic fitting, a pneumatic manifold, a pneumatic distributor or a pneumatic cylinder.

### BRIEF DESCRIPTION OF THE DRAWINGS

Further characteristics and advantages of the present invention will be more evident from the following description of some preferred embodiments thereof made with reference to the appended drawings.

The different features in the individual configurations can be combined with each other as preferred according to the previous description, should it be necessary to avail of the advantages resulting specifically from a particular combination.

In such drawings,
- figures 1 and 1a are section views of a first embodiment of the pneumatic functional unit according to the invention, specifically a first pneumatic fitting, in the configurations respectively without and with an inserted multilayer tube for the supply and/or the outflow of air;
- figures 2 and 2a are respectively a section view of a second embodiment of the pneumatic functional unit according to the invention, specifically a second pneumatic fitting and a section view of a variant of the second embodiment of the pneumatic functional unit according to the invention;
- figure 3 is a perspective view of a third embodiment of the pneumatic functional unit according to the invention, specifically a pneumatic manifold associated with a plurality of solenoid valves;
- figure 4 is a side elevation view of the pneumatic manifold of figure 3;
- figures 5 and 5a are respectively a section view of the pneumatic manifold of figure 4 along the line A-A and an enlarged detail of this section view;
- figures 6 and 6a are respectively a section view of a fourth embodiment of the pneumatic functional unit according to the invention, specifically a pneumatic distributor, and an enlarged detail of this section view;
- figures 7 and 7a are respectively a section view of a fifth embodiment of the pneumatic functional unit according to the invention, specifically a pneumatic cylinder, and an enlarged detail of this section view.

### DETAILED DESCRIPTION OF THE INVENTION

In the following description, for the illustration of the figures, identical numbers or reference symbols are used to indicate construction elements with the same function. Further, for illustration clarity, some references may not be repeated in all the figures.

While the invention is susceptible to various modifications and alternative constructions, certain preferred embodiments are shown in the drawings and are described hereinbelow in detail. However, it is to be understood that there is no intention to limit the invention to the specific embodiment illustrated but, on the contrary, the invention intends to cover all the modifications, alternative and equivalent constructions that fall within the context of the invention as defined in the claims.

The use of "for example", "etc.", "or" indicates non-exclusive alternatives without limitation, unless otherwise indicated. The use of "comprises" and "includes" means "comprises or includes, but not limited to", unless otherwise indicated.

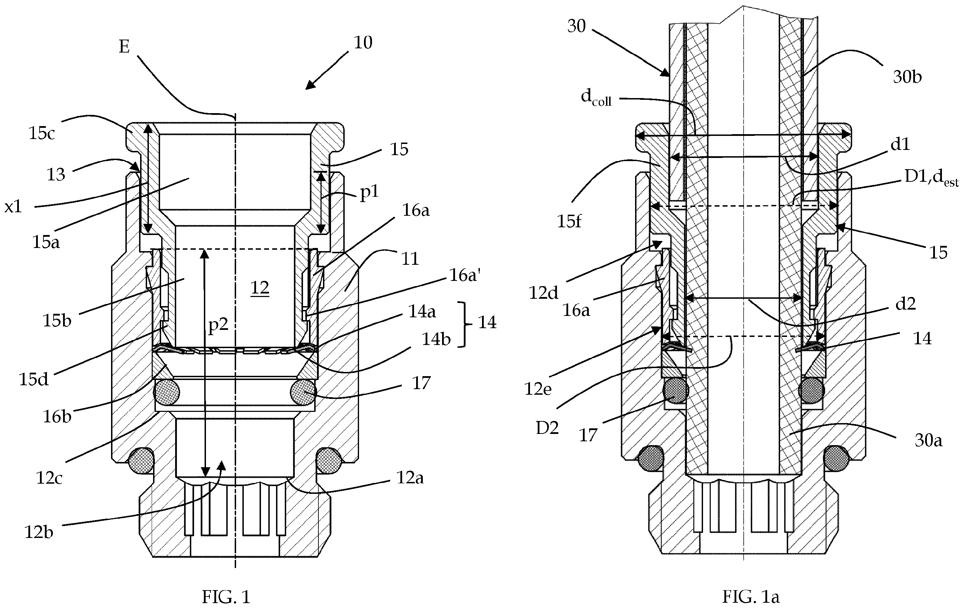

With reference to figures 1 and 1a, a first preferred embodiment of a pneumatic functional unit according to the present invention is shown, indicated as a whole with 10, specifically provided as a pneumatic fitting.

The pneumatic fitting 10 comprises a housing body 11 in which a retaining seat 12 of an end of a multilayer pipe 30 is provided for the supply and/or the outflow of air. The retaining seat 12 extends longitudinally along a development axis E, starting from an insertion opening 13 obtained in the housing body 11 and towards the inside of the body 11, until it reaches a bottom portion 12a of the seat. The bottom 12a of the retaining seat 12 has an air passage opening 12b.

The retaining seat 12 internally comprises elastic holding means 14 for holding the end of the tube 30 when it is inserted in the seat 12 through the insertion opening 13. In the illustrated example, the holding means 14 are made in the form of an annular element 14a provided with a plurality of teeth 14b protruding radially towards the centre of the annular element itself, for example made of elastic metal sheet.

The annular element 14a is inserted in the seat 12 coaxially to the same. In particular, the elastic holding means 14 are supported by a support ring 16b inserted in the retaining seat 12. The support ring 16b rests on a sealing gasket 17 which in turn rests on an annular recess 12c of the retaining seat located near the bottom of the seat 12a. In particular, the support ring 16b is placed proximal to the bottom of the seat 12a and defines a frustoconical mouth. It is also provided, above the elastic holding means 14, inside the seat 12, for a locking sleeve 16a configured to lock the holding means 14 in position inserted inside the seat 12.

Under the unstressed rest condition, the holding means 14 take on a configuration in which the teeth 14b are slightly inclined towards the bottom of the seat 12a. By inserting the end of a tube 30 into the seat 12, the teeth 14b of the annular element 14a are deformed to allow the passage of the tube 30, taking on a configuration that is more inclined towards the bottom of the seat 12a. Under said deformed condition, the teeth 14b of the annular element exert an elastic return force, pressing radially against the end of the tube 30 and in this way holding the end of the tube 30 inserted in position.

The pneumatic fitting 10 further comprises a tubular release element 15 arranged inside the seat 12 in a manner coaxial to the same and movable along the axis E between a rest position, partially extracted from the seat 12, and an operative position, substantially inserted in the seat.

In the rest position, the tubular release element 15 is maintained in a partially extracted position, resting on the holding means 14 which keep it raised. In the operative position in which the tubular element 15 is more inserted inside the seat 12, it 15 presses against the holding means 14 and cooperates with them to release the end of the tube 30. In particular, in the inserted operative position, the tubular element 15 exerts an axial thrust against the teeth 14b of the annular element, deforming them further and in this way disengaging them from the end of the tube 30 to allow their extraction. Advantageously, the support ring 16b acts as a limit to the size of the tubes that can be inserted in the fitting and therefore as a stop end to the deformation of the teeth of the annular element 14b in order to guarantee their elastic return to the unstressed rest condition.

The retaining seat 12 is shaped so as to internally define a first seat portion 12d proximal to the insertion opening 13 and having a first seat diameter D1, corresponding to the diameter of the insertion opening 13, and at least a second seat portion 12e, distal from said opening 13 and having a second seat diameter D2, smaller than the first seat diameter D1.

The tubular release element 15 comprises a first collar portion 15c protruding radially from the shell of the tubular element 15 and surrounding the inlet mouth of said element 15. The portion of collar 15c is arranged outside the retaining seat 12 and has a collar diameter d_{coll} greater than D₁ of the insertion opening 13. In this way, the first collar portion 15c acts as a stop end with respect to an insertion movement of the tubular release element 15 inside the seat 12, abutting against the free end of the seat 12.

The tubular release element 15 further comprises a second collar portion 15d protruding from the shell of the tubular element 15 which in the illustrated embodiment is placed substantially at the end of the tubular element 15 opposite the inlet mouth thereof. Said second collar portion 15d cooperates against an annular stop 16a' obtained in the locking sleeve 16a which protrudes radially towards the inside of the retaining seat 12 acting as a stop end with respect to an extraction movement of the tubular release element 15 beyond the partially extracted rest position.

In particular, the tubular release element 15 internally defines a hollow housing compartment comprising a first section 15a proximal to the insertion opening 13 having in section a first compartment diameter d₁ and a second section 15b, distal from the insertion opening 13, having in section a second compartment diameter d₂, smaller than the first compartment diameter d₁.

In this way it is possible to insert inside the retaining seat 12 both the end 30a of the multilayer tube 30 from which an outermost sheath has been removed, and also part of the subsequent section 30b from which the outermost sheath has not been removed.

In particular, as shown in figure 1a, in the inserted condition, the end 30a of the multilayer tube 30 without the outermost sheath crosses the second section 15b of the tubular release element 15, reaching the bottom 12a of the housing seat 12 and cooperating with the sealing gasket 17 to achieve a seal coupling. The subsequent section 30b of multilayer tube 30 also remains partly housed inside the tubular release element 15 and in particular at the first section 15a of release element 15 proximal to the outlet 13.

At the first section 15a having first compartment diameter d1, the tubular release element 15 has a segment 15f with an external diameter dₑₓₜ substantially corresponding to the diameter D1 of the insertion opening 13.

In detail, the segment 15f of the tubular release element 15 is intended to be accommodated in the first seat portion 12d so that, in the partially extracted rest position, the segment 15f overlaps the first seat portion 12d over a depth p1 equal to at least 50% of an extension x1 which characterizes the segment 15f, preferably equal to at least 60% of the extension x1.

In the context of the present description and of the following claims, "extension of the segment 15f" means the longitudinal measurement along the axis E running from the inlet mouth of the tubular release element 15 to the second section 15b having a smaller compartment diameter d2.

In exemplary terms, the depth p1 is equal at least to 3 mm and is typically comprised between 3 mm and 5 mm, preferably between 3.5 mm and 4.5 mm.

Similarly, the second seat portion 12e, distal from said opening 13, is made with a depth p2 typically comprised between 13 mm and 19 mm, preferably between 14 mm and 18 mm.

In order to ensure a good protection of the interface between the partially removed outermost sheath and the innermost sheath, as well as a high holding reliability of the multilayer tube, the ratio between the overlap depth p1 and the depth p2 of the second seat portion 12e is advantageously comprised between 0.2 < p1/p2 < 0.3, preferably between 0.21 < p1/p2 < 0.29, more preferably 0.22 < p1/p2 < 0.28.

In this way, an excellent protection of the interface between the section of multilayer tube 30 without outer sheath 30a and the subsequent section 30b is obtained, as well as the holding of the multilayer tube 30 under the inserted condition even in the event of a strong bending of the same. In fact, the segment 15f is kept in the seat thanks to an optimized overlap with the first seat portion 12d.

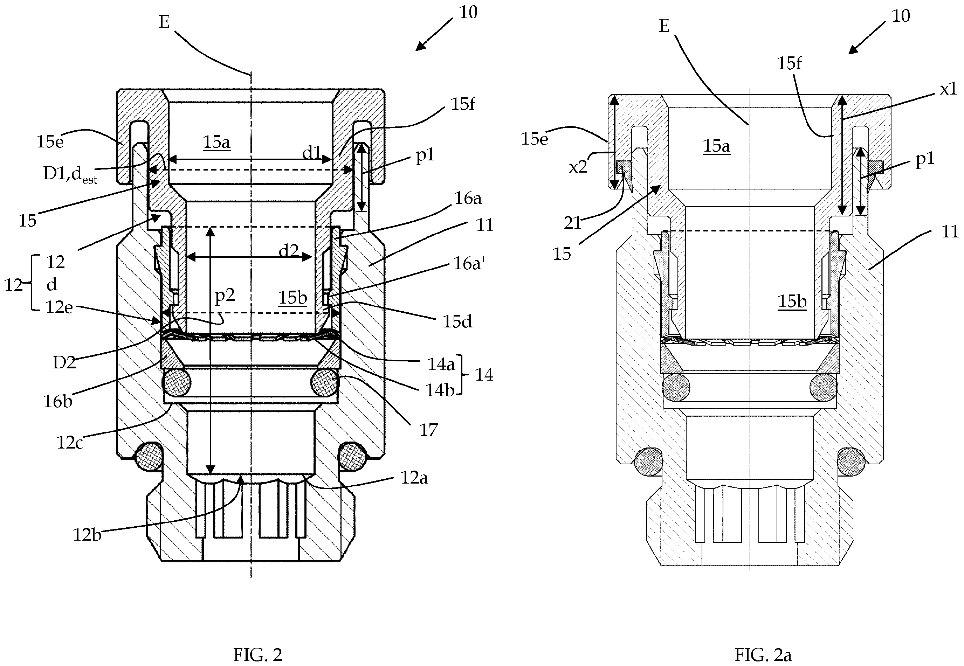

Figure 2 shows a second preferred embodiment of a pneumatic functional unit according to the present invention, also obtained as a pneumatic fitting 10.

The pneumatic fitting 10 of figure 2 differs from the pneumatic fitting of figures 1 and 1a only in how the inlet mouth of the tubular release element 15 is made. Instead of a protruding collar portion, an annular skirt-like portion 15e is envisaged which provides a cover and protection of the interface between the housing body 11 and the seat 12, defining a guide seat in which a portion of housing body 11 surrounding the insertion opening 13 remains slidably housed. Advantageously, the skirt-like portion has an extension x2 which is at least equal to the overlap depth p1 between the segment 15f and the first seat portion 12d, in particular it is preferably equal to at least twice the overlap depth p1.

In the context of the present description and of the following claims, "extension of the skirt-like portion" means the longitudinal measurement along the axis E running from the inlet mouth of the tubular release element 15 to the free end of said skirt-like portion 15e.

The skirt-like portion 15e in this way, in addition to protecting the interface between the housing body 11 and seat 12 in any relative position taken on between the housing body 11 and the release element 15, also acts as a stop end with respect to an insertion movement of the tubular release element 15 inside the seat 12, abutting against the free end of the seat 12, as well as a further stabilizing element with respect to significant bendings of the multilayer tube 30.

Moreover, the skirt-like portion 15e allows to increase the housing stability of the tubular release element 15 inside the housing body 11, preventing any oscillations of the element 15 caused by possible strong stresses exerted on the end of the inserted tube. In this way it is possible to reliably prevent any accidental uncoupling of the inserted tube due to the action that the tubular element 15 would involuntarily exert on the holding means 14.

Figure 2a shows a variant of the embodiment of figure 2 in which the skirt-like portion carries a scraping element 21 positioned in such a way as to exert a scraping action on the external wall portion of the housing body 11 that is most prone to fouling, for example during welding operations.

In this way, at each movement of the tubular element 15 the processing residues which will be deposited on the wall of the housing body 11, thereby obstructing or completely hindering the sliding of the tubular element 15, are prevented from entering the guide seat. Thanks to the action of the scraping element 21, the sliding of the tubular element 15 can be preserved over time.

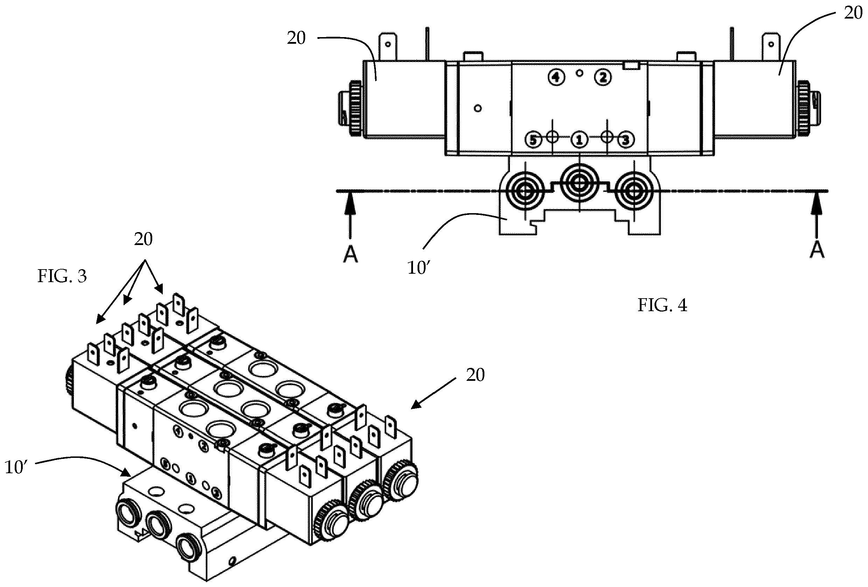

With reference to figures 3-5, a third preferred embodiment of a pneumatic functional unit according to the present invention is illustrated, indicated as a whole with 10', specifically made as a pneumatic manifold. In the figures, a three-channel pneumatic manifold associated with respective solenoid valves 20 is shown.

The pneumatic manifold 10' comprises a housing body 11 which defines three collection channels 11a. A seat 12 is provided at the two ends of each collection channel 11a, configured for the retention of an end of a multilayer pipe 30 for the supply and/or the outflow of air (not illustrated with reference to the embodiment of figures 3-5 since it is equivalent to the multilayer pipe of figure 1a).

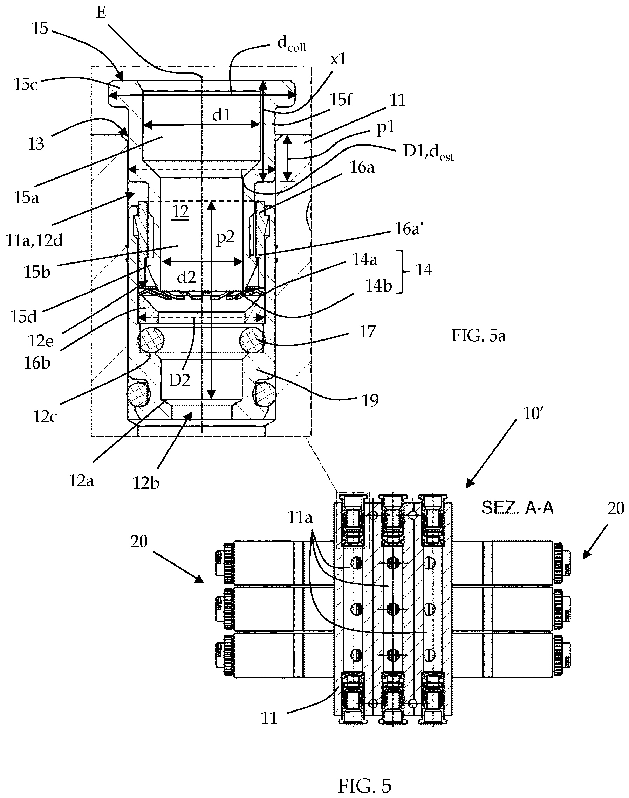

Figure 5a shows a retaining seat 12 in section by way of illustration of all the retaining seats 12 of the manifold 10'. As shown in figure 5a, each retaining seat 12 extends longitudinally along its own development axis E - which specifically coincides with the development axis of the respective collection channel 11a - starting from a respective insertion opening 13 obtained in one end of the collection channel 11a and towards the inside of the same 11a, until reaching a respective bottom portion 12a of the seat.

The retaining seat 12 internally defines a first seat portion 12d proximal to the insertion opening 13 and having a first seat diameter D1, corresponding to the diameter of the insertion opening 13, and at least a second seat portion 12e, distal from said opening 13 and proximal to the bottom 12a of the seat, having a second seat diameter D2, smaller than the first seat diameter D1. The second seat portion 12e is defined by a tubular insert 19 inserted in the respective collection channel 11a and shaped in such a way as to house the locking sleeve 16a, the support ring 16b and the sealing gasket 17.

The bottom 12a of each retaining seat 12 has its own air passage opening 12b intended to make the collected air flow into or out of the respective collection channel 11a.

Also in this case, each retaining seat 12 internally comprises elastic holding means 14 for holding the end of the tube 30 when this end is inserted in the seat 12 through the insertion opening 13. The elastic holding means 14 of the manifold 10' are made in a manner equivalent to the elastic holding means described with reference to the pneumatic fitting 10 and are carried by the support ring 16b internally constrained to the tubular insert 19.

The pneumatic manifold 10' further comprises a tubular release element 15 arranged inside the seat 12 in a manner coaxial to the same and movable along the axis E between a rest position, partially extracted from the seat 12, and an operative position, substantially inserted in the seat 12, where, at the operative position, the tubular release element 15 cooperates with the holding means 14 to release the end of the tube 30.

The tubular release element 15 is also made in a manner equivalent to the tubular release element described with reference to the pneumatic fitting 10 and in particular it internally defines a hollow housing compartment comprising a first section 15a proximal to the insertion opening 13 having in section a first compartment diameter d1 and a second section 15b distal from the opening 13, having in section a second compartment diameter d2, smaller than the first compartment diameter d1. In this way it is possible to house inside the tubular release element 15 both the end 30a of the multilayer tube 30 without the outermost sheath, and at least a portion of a subsequent section 30b of the multilayer tube 30 from which the outermost sheath has not been removed.

In particular, at the first section 15a having first compartment diameter d1, the tubular release element 15 has a segment 15f with an external diameter dₑₓₜ substantially corresponding to the diameter D1 of the insertion opening 13. In this way, when the tubular release element 15 is in its fully inserted condition, it practically forms an element of continuity with the tubular insert 19 inserted in the collection channel 11a.

The segment 15f of the tubular release element 15 is intended to be accommodated in the first seat portion 12d so that, in the partially extracted rest position, the segment 15f overlaps the first seat portion 12d over a depth p1 equal to at least 50% of the extension x1 which characterizes the segment 15f, preferably equal to at least 60% of the extension x1. In exemplary terms, the depth p1 is equal at least to 3 mm and is typically comprised between 3 mm and 5 mm, preferably between 3.5 mm and 4.5 mm.

Also in this case, the second seat portion 12e, distal from said opening 13, is obtained with a depth p2 typically comprised between 13 mm and 19 mm, preferably between 14 mm and 18 mm.

Furthermore, in order to ensure a good protection of the interface between the partially removed outermost sheath and the innermost sheath, as well as a high holding reliability of the multilayer tube, the ratio between the overlap depth p1 and the depth p2 of the second seat portion 12e is advantageously comprised between 0.2 < p1/p2 < 0.3, preferably between 0.21 < p1/p2 < 0.29, more preferably 0.22 < p1/p2 < 0.28.

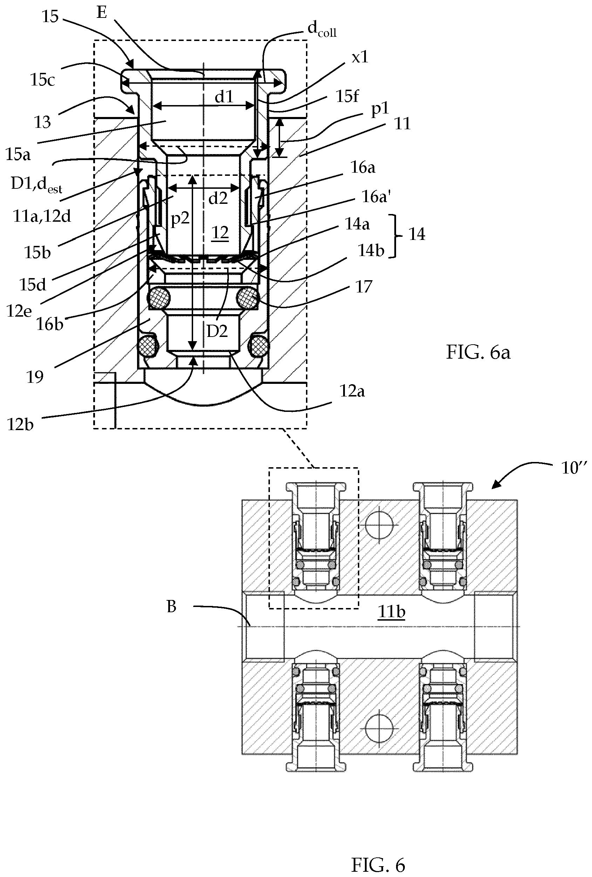

With reference to figures 6, a fourth preferred embodiment of a pneumatic functional unit according to the present invention is illustrated, indicated as a whole with 10', specifically made as a pneumatic distributor.

The pneumatic distributor 10" also comprises a housing body 11 in which a plurality of seats 12 are obtained, each configured for the retention of an end of a multilayer pipe 30 for the supply and/or the outflow of air (not illustrated with reference to the embodiment of figures 6 and 6a since it is equivalent to the multilayer pipe of figure 1a).

Figure 6 shows four retaining seats 12 in section. Each retaining seat 12 extends longitudinally along its own development axis E, starting from a respective insertion opening 13 obtained in the housing body 11 and along a channel portion 11a which extends towards the inside of the body 11, until reaching a respective bottom portion 12a of the seat.

As shown in figure 6a, also in this case the retaining seat 12 internally defines a first seat portion 12d proximal to the insertion opening 13 and having a first seat diameter D1, corresponding to the diameter of the insertion opening 13, and at least a second seat portion 12e, distal from said opening 13 and proximal to the bottom 12a of the seat, having a second seat diameter D2, smaller than the first seat diameter D1. The second seat portion 12e is defined by a tubular insert 19 inserted in the channel portion 11a and is shaped in such a way as to house the locking sleeve 16a, the support ring 16b and the sealing gasket 17.

The bottom 12a of each retaining seat 12 has its own air passage opening 12b intended to allow the collected air to flow into or out of a central compartment 11b inside the housing body 11 of the distributor 10". In particular, the central compartment 11b of the pneumatic distributor 10" has an extension along an axis B transverse to the extension axes E of the retaining seats 12.

Also in this case, each retaining seat 12 internally comprises elastic means 14 for holding the end of the tube 30 when said end is inserted in the seat 12 through the insertion opening 13, which are made in an equivalent manner to the elastic holding means described with reference to the pneumatic fitting 10 and are carried by the support ring 16b internally constrained to the tubular insert 19.

Moreover, the pneumatic distributor 10' further comprises a tubular release element 15 arranged inside the seat 12 in a manner coaxial to the same and movable along the axis E between a rest position, partially extracted from the seat, and an operative position, substantially inserted in the seat, where, in the operative position, the tubular release element 15 cooperates with the holding means 14 to release the end of the tube 30.

The tubular release element 15 of the distributor 10" is also made in a manner equivalent to the tubular release element described with reference to the pneumatic fitting 10 and in particular it internally defines a hollow housing compartment comprising a first section 15a proximal to the insertion opening 13 and having in section a first compartment diameter d1 and a second section 15b distal from the opening 13, having in section a second compartment diameter d2, smaller than the first compartment diameter d1. In this way it is possible to house inside the tubular release element 15 both the end 30a of the multilayer tube 30 without the outermost sheath, and at least a portion of a subsequent section 30b of the multilayer tube 30 from which the outermost sheath has not been removed.

As in the case of the pneumatic manifold 10', at the first section 15a having first compartment diameter d1, the tubular release element 15 has a segment 15f with an external diameter dₑₓₜ substantially corresponding to the diameter D1 of the insertion opening 13. In this way, when the tubular release element 15 is in its fully inserted condition, it practically forms an element of continuity with the tubular insert 19 inserted in the channel portion 11a.

The segment 15f of the tubular release element 15 is intended to be accommodated in the first seat portion 12d so that, in the partially extracted rest position, the segment 15f overlaps the first seat portion 12d over a depth p1 equal to at least 50% of the extension x1 which characterises the segment 15f, preferably equal to at least 60%. In exemplary terms, the depth p1 is equal at least to 3 mm and is typically comprised between 3 mm and 5 mm, preferably between 3.5 mm and 4.5 mm.

Also in this case, the second seat portion 12e, distal from said opening 13, is made with a depth p2 typically comprised between 13 mm and 19 mm, preferably between 14 mm and 18 mm.

Furthermore, in order to ensure a good protection of the interface between the partially removed outermost sheath and the innermost sheath, as well as a high holding reliability of the multilayer tube, the ratio between the overlap depth p1 and the depth p2 of the second seat portion 12e is advantageously comprised between 0.2 < p1/p2 < 0.3, preferably between 0.21 < p1/p2 < 0.29, more preferably 0.22 < p1/p2 < 0.28.

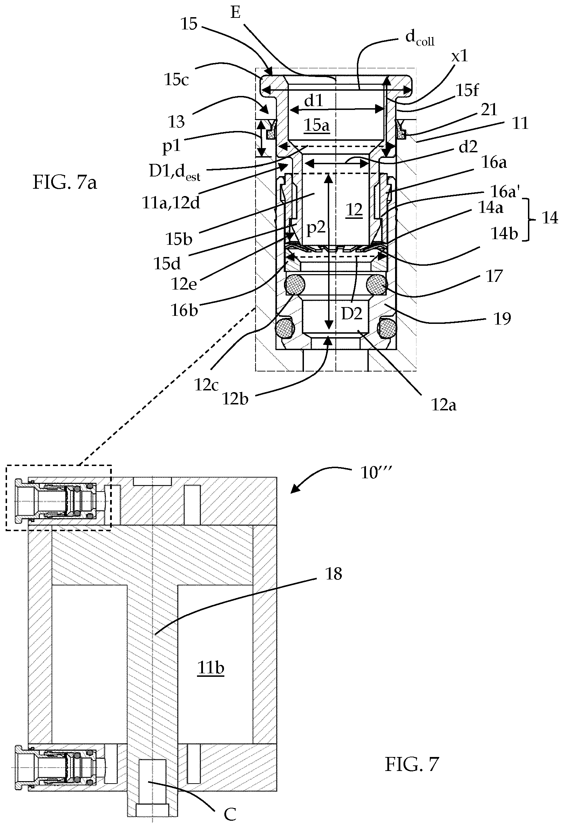

With reference to figure 7, a fifth preferred embodiment of a pneumatic functional unit according to the present invention is illustrated, indicated as a whole with 10‴, specifically made as a pneumatic cylinder.

The pneumatic cylinder 10‴ also comprises a housing body 11 inside which a piston 18 is slidably arranged and is moved along a movement axis C by the action of the air supplied to a central compartment 11b defined inside the housing body 11.

One or more seats 12 are obtained in the housing body (in the illustrated example two seats 12) each configured for the retention of an end of a multilayer pipe 30 for the supply and/or the outflow of air (not illustrated with reference to the embodiment of figures 7 and 7a since it is equivalent to the multilayer pipe of figure 1a). Figure 7 show the retaining seats 12 in section and an enlarged retaining seat 12 is visible in figure 7a.

Also with reference to the pneumatic cylinder 10‴, each retaining seat 12 extends longitudinally along its own development axis E - transversal to the movement axis C of the piston 18 - starting from a respective insertion opening 13 obtained in the body containment 11 and along a channel portion 11a which extends towards the inside of the body 11, until reaching a respective bottom portion 12a of the seat.

Also in this case the retaining seat 12 internally defines a first seat portion 12d proximal to the insertion opening 13 and having a first seat diameter D1, corresponding to the diameter of the insertion opening 13, and at least a second seat portion 12e, distal from said opening 13 and proximal to the bottom 12a of the seat, having a second seat diameter D2, smaller than the first seat diameter D1. The second seat portion 12e is defined by a tubular insert 19 inserted in the channel portion 11a and is shaped in such a way as to house the locking sleeve 16a, the support ring 16b and the sealing gasket 17.

The bottom 12a of each retaining seat 12 has its own air passage opening 12b intended to allow the collected air to flow into or out of a central compartment 11b inside the housing body 11 of the cylinder 10"'.

Also in this case, each retaining seat 12 internally comprises elastic holding means 14 for holding the end of the tube 30 when this end is inserted in the seat 12 through the insertion opening 13. The elastic holding means 14 are made in a manner equivalent to the elastic holding means described with reference to the pneumatic fitting 10 and are carried by the support ring 16b internally constrained to the tubular insert 19.

Moreover, the pneumatic cylinder 10‴ further comprises a tubular release element 15 arranged inside the seat 12 in a manner coaxial to the same and movable along the axis E between a rest position, partially extracted from the seat, and an operative position, substantially inserted in the seat, where, in the operative position, the tubular release element 15 cooperates with the holding means 14 to release the end of the tube 30.

The tubular release element 15 of the cylinder 10‴ is also made in a manner equivalent to the tubular release element described with reference to the pneumatic fitting 10 and in particular it internally defines a hollow housing compartment comprising a first section 15a proximal to the insertion opening 13 having in section a first compartment diameter d1 and a second section 15b distal from the opening 13, having in section a second compartment diameter d2, smaller than the first compartment diameter d1.

In this way it is possible to house inside the tubular release element 15 both the end 30a of the multilayer tube 30 without the outermost sheath, and at least a portion of a subsequent section 30b of the multilayer tube 30 from which the outermost sheath has not been removed.

Finally, as in the case of the pneumatic manifold 10', at the first section 15a having first compartment diameter d1, the tubular release element 15 has a segment 15f with an external diameter dₑₓₜ substantially corresponding to the diameter D1 of the insertion opening 13. In this way, when the tubular release element 15 is in its fully inserted condition, it practically forms an element of continuity with the tubular insert 19 inserted in the channel portion 11a.

The segment 15f of the tubular release element 15 is intended to be accommodated in the first seat portion 12d so that, in the partially extracted rest position, the segment 15f overlaps the first seat portion 12d over a depth p1 equal to at least 50% of the extension x1 which characterizes the segment 15f, preferably equal to at least 60% of the extension x1. In exemplary terms, the depth p1 is equal at least to 3 mm and is typically comprised between 3 mm and 5 mm, preferably between 3.5 mm and 4.5 mm.

Also in this case, the second seat portion 12e, distal from said opening 13, is made with a depth p2 typically comprised between 13 mm and 19 mm, preferably between 14 mm and 18 mm.

Furthermore, in order to ensure a good protection of the interface between the partially removed outermost sheath and the innermost sheath, as well as a high holding reliability of the multilayer tube, the ratio between the overlap depth p1 and the depth p2 of the second seat portion 12e is advantageously comprised between 0.2 < p1/p2 < 0.3, preferably between 0.21 < p1/p2 < 0.29, more preferably 0.22 < p1/p2 < 0.28.

The housing body 11 of the pneumatic cylinder 10‴ carries a scraping element 21 positioned so as to exert a scraping action on the external wall portion of the tubular release element 15. In this way, at each movement of the tubular element 15 the processing residues which will be deposited on the wall of the tubular element 15, which, in the rest condition, protrudes from the housing body 11, are prevented from entering the housing body 11. Thanks to the action of the scraping element 21, the sliding of the tubular element 15 can be reliably preserved over time.

In alternative embodiments (not illustrated), the pneumatic functional unit is obtained as a pneumatic fitting or pneumatic manifold or even pneumatic distributor whose housing body carries a scraping element positioned so as to exert a scraping action on the external wall portion of the tubular release element, thus ensuring in this way that the processing residues which will be deposited on the wall of the tubular element which, in the rest condition, protrudes from the housing body, are prevented from entering into the housing body.

## Claims

1. A pneumatic function unit (10,10',10",10‴) comprising a housing body (11) in which at least one retaining seat (12) for retaining an end of a multilayer tube (30) is obtained, the seat (12) extending longitudinally along a development axis (E) between an insertion opening (13) and a bottom of the seat (12a) placed inside the housing body (11), the retaining seat (12) internally comprising elastic holding means (14) for holding the end of a multilayer tube (30a, 30b) when inserted into the seat (12) through the insertion opening (13), and at least one tubular release element (15) at least partially housed in the retaining seat (12) in a manner coaxial to the seat (12) and movable along the development axis (E) between a rest position, partially extracted from the seat (12), and an operative position, substantially inserted in the seat (12), wherein, in its operative position, the tubular release element (15) is configured to cooperate with the holding means (14) to release the end of the multilayer tube (30), the tubular release element (15) internally defining a housing compartment (15a, 15b) comprising a first section (15a) proximal to the opening (13) having a first lateral wall extending parallel to the development axis (E) which defines in section a first compartment diameter (d1) and is configured to receive a section (30b) of the multilayer tube (30a, 30b) from which an outermost sheath has not been removed, and a second section (15b) distal from the opening (13), having a second lateral wall extending parallel to the development axis (E) which defines in section a second compartment diameter (d2) and is configured to receive a section (30a) of the multilayer tube (30a, 30b) from which an outermost sheath has been removed, wherein the first compartment diameter (d1) is greater than the second compartment diameter (d2),
wherein the retaining seat (12) is shaped so as to internally define a first seat portion (12d) with a first seat diameter (D1) and at least one second seat portion (12e) with a second seat diameter (D2), smaller than the first seat diameter (D1), **characterized in that** at the first section (15a) with greater first compartment diameter (d1), the tubular release element (15) defines a segment (15f) at least partially projecting from the retaining seat (12) when the release element (15) is in the rest position, the segment (15f) having an external diameter (dₑₓₜ) substantially corresponding to the first seat diameter (D1), wherein at the partially extracted rest position, the segment (15f) overlaps the first seat portion (12d) over a first depth (p1), the first overlap depth (p1) over which the segment (15f) and the first seat portion (12d) overlap being equal to at least 50% of the axial extension (x1) of the segment (15f).

2. Pneumatic function unit (10,10',10",10‴) according to claim 1, wherein the second seat portion (12e) with a second seat diameter (D2), smaller than the first seat diameter (D1) is defined inside a shaped tubular insert (19) inserted in a longitudinal channel portion (11a) of the housing body (11) which extends along the development axis (E).

3. Pneumatic function unit (10,10',10",10‴) according to claim 1 or 2, wherein the first overlap depth (p1) over which the segment (15f) and the first seat portion (12d) overlap is equal to at least 60% of the extension (x1) of the segment (15f).

4. Pneumatic function unit (10,10',10",10‴) according any one of claims 1 to 3, wherein the first overlap depth (p1) over which the segment (15f) and the first seat portion (12d) overlap is equal at least to 3 mm, preferably comprised between 3 mm and 5 mm, more preferably comprised between 3.5 mm and 4.5 mm.

5. Pneumatic function unit (10,10',10",10‴) according to any one of claims 1 to 4, wherein the second seat portion (12e) has a second depth (p2), wherein the ratio between the first depth (p1) and the second depth (p2) is comprised between 0.2 < p1/p2 < 0.3, preferably between 0.21 < p1/p2 < 0.29, more preferably 0.22 < p1/p2 < 0.28.

6. Pneumatic function unit (10,10',10",10‴) according to any one of the preceding claims, wherein the holding means (14) are carried by a support ring (16b) inserted in the retaining seat (12).

7. Pneumatic function unit (10,10',10",10‴) according to claim 6, wherein the support ring (16b) rests on a sealing element (17) included in the retaining seat (12), wherein the sealing element (17) rests on an annular recess (12c) of the retaining seat (12) obtained nearby the bottom of the seat (12a).

8. Pneumatic function unit (10,10',10",10‴) according to claim 6 or 7, wherein the support ring (16b) defines a frustoconical mouth.

9. Pneumatic function unit (10,10',10",10‴) according to any one of the preceding claims, wherein the at least one tubular release element (15) defines an inlet mouth at a first end thereof proximal to the insertion opening (13), wherein the inlet mouth of the at least one tubular release element (15) comprises an annular skirt-like portion (15e) configured to provide a perimeter cover of the insertion opening (13), thereby defining a guide seat in which a portion of the housing body (11) surrounding the insertion opening (13) remains slidably housed.

10. Pneumatic function unit (10,10',10",10‴) according to any one of the preceding claims, wherein at least one scraping element (21) acts between the at least one tubular release element (15) and the housing body (11) which scraping element is positioned so as to exert a scraping action on a portion of the interface wall for the reciprocal sliding between the at least one tubular release element (15) and the housing body (11).

11. Pneumatic function unit (10,10',10",10‴) according to claim 10 when dependent on claim 9, wherein the scraping element (21) is carried by the skirt-like portion (15e) and placed substantially at the free end of the skirt-like portion (15e).

12. Pneumatic function unit (10,10',10",10‴) according to claim 10, wherein the scraping element (21) is carried by the housing body (11) substantially at the insertion opening (13).

13. Pneumatic function unit (10,10',10",10‴) according to any one of the preceding claims, wherein the pneumatic function unit is a pneumatic fitting (10), a pneumatic manifold (10'), a pneumatic distributor (10") or a pneumatic cylinder (10‴).

## Patentansprüche

1. Pneumatische Funktionseinheit (10, 10', 10", 10"'), die einen Gehäusekörper (11) umfasst, in dem mindestens ein Haltesitz (12) zum Halten eines Endes eines mehrschichtigen Rohrs (30) erreicht wird, wobei sich der Sitz (12) in Längsrichtung entlang einer Längsachse (E) zwischen einer Einführöffnung (13) und einem Boden des Sitzes (12a) erstreckt, der innerhalb des Gehäusekörpers (11) angeordnet ist, wobei der Haltesitz (12) im Inneren elastische Haltemittel (14) zum Halten des Endes eines mehrschichtigen Rohrs (30a, 30b), wenn es durch die Einführöffnung (13) in den Sitz (12) eingeführt wird, und mindestens ein rohrförmiges Freigabeelement (15) umfasst, das zumindest teilweise in dem Haltesitz (12) koaxial zu dem Sitz (12) aufgenommen ist und entlang der Längsachse (E) zwischen einer Ruheposition, in der es teilweise aus dem Sitz (12) herausgezogen ist, und einer Betriebsposition, in der es im Wesentlichen in den Sitz (12) eingeführt ist, beweglich ist, wobei das rohrförmige Freigabeelement (15) in seiner Betriebsposition derart konfiguriert ist, dass es mit den Haltemitteln (14) zusammenwirkt, um das Ende des mehrschichtigen Rohrs (30) freizugeben, wobei das rohrförmige Freigabeelement (15) im Inneren eine Aufnahmekammer (15a, 15b) definiert, die einen ersten Abschnitt (15a) proximal von der Öffnung (13), der eine erste Seitenwand aufweist, die sich parallel zur Längsachse (E) erstreckt und im Schnitt einen ersten Kammerdurchmesser (d1) definiert und derart konfiguriert ist, dass sie einen Abschnitt (30b) des mehrschichtigen Rohrs (30a, 30b) aufnimmt, von dem eine äußerste Umhüllung nicht entfernt wurde, und einen zweiten Abschnitt (15b) distal von der Öffnung (13) umfasst, der eine zweite Seitenwand aufweist, die sich parallel zu der Längsachse (E) erstreckt, die im Schnitt einen zweiten Kammerdurchmesser (d2) definiert und derart konfiguriert ist, dass sie einen Abschnitt (30a) des Mehrschichtrohrs (30a, 30b) aufnimmt, von dem eine äußerste Umhüllung entfernt wurde, wobei der erste Kammerdurchmesser (d1) größer als der zweite Kammerdurchmesser (d2) ist,
wobei der Haltesitz (12) derart geformt ist, dass er im Inneren einen ersten Sitzabschnitt (12d) mit einem ersten Sitzdurchmesser (D1) und mindestens einen zweiten Sitzabschnitt (12e) mit einem zweiten Sitzdurchmesser (D2) definiert, der kleiner als der erste Sitzdurchmesser (D1) ist, **dadurch gekennzeichnet, dass** das rohrförmige Freigabeelement (15) an dem ersten Abschnitt (15a) mit dem größeren ersten Kammerdurchmesser (d1) ein Segment (15f) definiert, das zumindest teilweise aus dem Haltesitz (12) herausragt, wenn sich das Freigabeelement (15) in der Ruheposition befindet, wobei das Segment (15f) einen Außendurchmesser (dₑₓₜ) aufweist, der im Wesentlichen dem ersten Sitzdurchmesser (D1) entspricht, wobei das Segment (15f) in der teilweise herausgezogenen Ruheposition den ersten Sitzabschnitt (12d) über eine erste Tiefe (p1) überlappt, wobei die erste Überlappungstiefe (p1), über die das Segment (15f) und der erste Sitzabschnitt (12d) überlappen, gleich mindestens 50% der axialen Ausdehnung (x1) des Segments (15f) ist.

2. Pneumatische Funktionseinheit (10, 10', 10", 10"') nach Anspruch 1,
wobei der zweite Sitzabschnitt (12e) mit einem zweiten Sitzdurchmesser (D2), der kleiner als der erste Sitzdurchmesser (D1) ist, im Inneren eines geformten rohrförmigen Einsatzes (19) definiert ist, der in einen Längskanalabschnitt (11a) des Gehäusekörpers (11) eingesetzt ist, der sich entlang der Längsachse (E) erstreckt.

3. Pneumatische Funktionseinheit (10, 10', 10", 10"') nach Anspruch 1 oder 2,
wobei die erste Überlappungstiefe (p1), über die das Segment (15f) und der erste Sitzabschnitt (12d) überlappen, gleich mindestens 60 % der Ausdehnung (x1) des Segments (15f) ist.

4. Pneumatische Funktionseinheit (10, 10', 10", 10"') nach einem der Ansprüche 1 bis 3, wobei die erste Überlappungstiefe (p1), über die das Segment (15f) und der erste Sitzabschnitt (12d) überlappen, mindestens 3 mm beträgt, vorzugsweise zwischen 3 mm und 5 mm liegt, besonders bevorzugt zwischen 3,5 mm und 4,5 mm liegt.

5. Pneumatische Funktionseinheit (10, 10', 10", 10"') nach einem der Ansprüche 1 bis 4, wobei der zweite Sitzabschnitt (12e) eine zweite Tiefe (p2) aufweist, wobei das Verhältnis zwischen der ersten Tiefe (p1) und der zweiten Tiefe (p2) zwischen 0,2 < p1/p2 < 0,3, vorzugsweise zwischen 0,21 < p1/p2 < 0,29, besonders bevorzugt 0,22 < p1/p2 < 0,28 liegt.

6. Pneumatische Funktionseinheit (10, 10', 10", 10"') nach einem der vorhergehenden Ansprüche, **dadurch gekennzeichnet, dass** die Haltemittel (14) von einem in den Haltesitz (12) eingesetzten Stützring (16b) getragen werden.

7. Pneumatische Funktionseinheit (10, 10', 10", 10"') nach Anspruch 6, wobei der Stützring (16b) auf einem Dichtungselement (17) aufliegt, das in dem Haltesitz (12) enthalten ist, wobei das Dichtungselement (17) auf einer ringförmigen Ausnehmung (12c) des Haltesitzes (12) aufliegt, die in der Nähe des Bodens des Sitzes (12a) erhalten wird.

8. Pneumatische Funktionseinheit (10, 10', 10", 10"') nach Anspruch 6 oder 7, wobei der Stützring (16b) eine kegelstumpfförmige Öffnung definiert.

9. Pneumatische Funktionseinheit (10, 10', 10", 10"') nach einem der vorhergehenden Ansprüche, wobei das mindestens eine rohrförmige Freigabeelement (15) an seinem ersten Ende nahe der Einführöffnung (13) eine Einlassöffnung definiert, wobei die Einlassöffnung des mindestens einen rohrförmigen Freigabeelements (15) einen ringförmigen, schürzenartigen Abschnitt (15e) umfasst, der derart konfiguriert ist, dass er eine Umfangsabdeckung der Einführöffnung (13) bereitstellt, wodurch ein Führungssitz definiert wird, in dem ein Abschnitt des Gehäusekörpers (11), der die Einführöffnung (13) umgibt, verschiebbar aufgenommen bleibt.

10. Pneumatische Funktionseinheit (10, 10', 10", 10"') nach einem der vorhergehenden Ansprüche, wobei zwischen dem mindestens einen rohrförmigen Auslöseelement (15) und dem Gehäusekörper (11) mindestens ein Kratzelement (21) wirkt, das derart positioniert ist, dass es eine Kratzwirkung auf einen Teil der Grenzflächenwand für das gegenseitige Gleiten zwischen dem mindestens einen rohrförmigen Freigabeelement (15) und dem Gehäusekörper (11) ausübt.

11. Pneumatische Funktionseinheit (10, 10', 10", 10"') nach Anspruch 10, wenn dieser von Anspruch 9 abhängt, wobei das Kratzelement (21) von dem schürzenartigen Abschnitt (15e) getragen wird und im Wesentlichen am freien Ende des schürzenartigen Abschnitts (15e) angeordnet ist.

12. Pneumatische Funktionseinheit (10, 10', 10", 10"') nach Anspruch 10, wobei das Kratzelement (21) im Wesentlichen an der Einführöffnung (13) von dem Gehäusekörper (11) getragen wird.

13. Pneumatische Funktionseinheit (10, 10', 10", 10"') nach einem der vorhergehenden Ansprüche, wobei die pneumatische Funktionseinheit eine pneumatische Armatur (10), ein pneumatischer Anschluss (10'), ein pneumatischer Verteiler (10") oder ein pneumatischer Zylinder (10"') ist.

## Revendications

1. - Unité de fonction pneumatique (10, 10', 10", 10‴) comprenant un corps de logement (11) dans lequel au moins un siège de retenue (12) pour retenir une extrémité d'un tube multicouche (30) est obtenu, le siège (12) s'étendant longitudinalement le long d'un axe de développement (E) entre une ouverture d'insertion (13) et un fond du siège (12a) placé à l'intérieur du corps de logement (11), le siège de retenue (12) comprenant intérieurement des moyens de maintien élastiques (14) pour maintenir l'extrémité d'un tube multicouche (30a, 30b) lors d'une insertion dans le siège (12) à travers l'ouverture d'insertion (13), et au moins un élément de libération tubulaire (15) au moins partiellement reçu dans le siège de retenue (12) d'une manière coaxiale au siège (12) et mobile le long de l'axe de développement (E) entre une position de repos, partiellement extraite du siège (12), et une position fonctionnelle, sensiblement insérée dans le siège (12), dans sa position fonctionnelle l'élément de libération tubulaire (15) étant configuré pour coopérer avec les moyens de maintien (14) pour libérer l'extrémité du tube multicouche (30), l'élément de libération tubulaire (15) définissant intérieurement un compartiment de logement (15a, 15b) comprenant une première section (15a) proximale à l'ouverture (13) ayant une première paroi latérale s'étendant parallèlement à l'axe de développement (E) qui définit en section un premier diamètre de compartiment (d1) et est configurée pour recevoir une section (30b) du tube multicouche (30a, 30b) à partir de laquelle une gaine la plus externe n'a pas été retirée, et une seconde section (15b) distale par rapport à l'ouverture (13), ayant une seconde paroi latérale s'étendant parallèlement à l'axe de développement (E) qui définit en section un second diamètre de compartiment (d2) et est configurée pour recevoir une section (30a) du tube multicouche (30a, 30b) à partir de laquelle une gaine la plus externe a été retirée, le premier diamètre de compartiment (d1) étant plus grand que le second diamètre de compartiment (d2), le siège de retenue (12) étant formé de façon à définir intérieurement une première partie de siège (12d) avec un premier diamètre de siège (D1) et au moins une seconde partie de siège (12e) avec un second diamètre de siège (D2), plus petit que le premier diamètre de siège (D1), **caractérisée par le fait que**, à la première section (15a) avec le premier diamètre de compartiment plus grand (d1), l'élément de libération tubulaire (15) définit un segment (15f) se projetant au moins en partie à partir du siège de retenue (12) lorsque l'élément de libération (15) est dans la position de repos, le segment (15f) ayant un diamètre externe (dₑₓₜ) correspondant sensiblement au premier diamètre de siège (D1), à la position de repos partiellement extraite le segment (15f) chevauchant la première partie de siège (12d) sur une première profondeur (p1), la première profondeur de chevauchement (p1) sur laquelle le segment (15f) et la première partie de siège (12d) se chevauchent étant égale à au moins 50 % de l'extension axiale (x1) du segment (15f).

2. - Unité de fonction pneumatique (10, 10', 10", 10‴) selon la revendication 1, dans laquelle la seconde partie de siège (12e) avec un second diamètre de siège (D2), plus petit que le premier diamètre de siège (D1), est définie à l'intérieur d'un insert tubulaire formé (19) inséré dans une partie canal longitudinale (11a) du corps de logement (11) qui s'étend le long de l'axe de développement (E).

3. - Unité de fonction pneumatique (10, 10', 10", 10‴) selon la revendication 1 ou 2, dans laquelle la première profondeur de chevauchement (p1) sur laquelle le segment (15f) et la première partie de siège (12d) se chevauchent est égale à au moins 60 % de l'extension (x1) du segment (15f).

4. - Unité de fonction pneumatique (10, 10', 10", 10‴) selon l'une quelconque des revendications 1 à 3, dans laquelle la première profondeur de chevauchement (p1) sur laquelle le segment (15f) et la première portion de siège (12d) se chevauchent est au moins égale à 3 mm, de préférence comprise entre 3 mm et 5 mm, de façon davantage préférée comprise entre 3,5 mm et 4,5 mm.

5. - Unité de fonction pneumatique (10, 10', 10", 10‴) selon l'une quelconque des revendications 1 à 4, dans laquelle la seconde partie de siège (12e) a une seconde profondeur (p2), le rapport entre la première profondeur (p1) et la seconde profondeur (p2) étant compris entre 0,2 < p1/p2 < 0,3, de préférence entre 0,21 < p1/p2 < 0,29, de façon davantage préférée 0,22 < p1/p2 < 0,28.

6. - Unité de fonction pneumatique (10, 10', 10", 10‴) selon l'une quelconque des revendications précédentes, dans laquelle les moyens de maintien (14) sont portés par une bague de support (16b) insérée dans le siège de retenue (12).

7. - Unité de fonction pneumatique (10, 10', 10", 10‴) selon la revendication 6, dans laquelle la bague de support (16b) repose sur un élément d'étanchéité (17) inclus dans le siège de retenue (12), l'élément d'étanchéité (17) reposant sur un évidement annulaire (12c) du siège de retenue (12) obtenu à proximité du fond du siège (12a).

8. - Unité de fonction pneumatique (10, 10', 10", 10‴) selon la revendication 6 ou 7, dans laquelle la bague de support (16b) définit un embout tronconique.

9. - Unité de fonction pneumatique (10, 10', 10", 10‴) selon l'une quelconque des revendications précédentes, dans laquelle l'au moins un élément de libération tubulaire (15) définit un embout d'entrée à une première extrémité de celui-ci proximale à l'ouverture d'insertion (13), l'embout d'entrée de l'au moins un élément de libération tubulaire (15) comprenant une partie annulaire de type jupe (15e) configurée pour fournir un recouvrement périphérique de l'ouverture d'insertion (13), définissant ainsi un siège de guidage dans lequel une partie du corps de logement (11) entourant l'ouverture d'insertion (13) reste reçue de manière coulissante.

10. - Unité de fonction pneumatique (10, 10', 10", 10‴) selon l'une quelconque des revendications précédentes, dans laquelle au moins un élément de raclage (21) agit entre l'au moins un élément de libération tubulaire (15) et le corps de logement (11), lequel élément de raclage est positionné de façon à exercer une action de raclage sur une partie de la paroi d'interface pour le coulissement en va-et-vient entre l'au moins un élément de libération tubulaire (15) et le corps de logement (11).

11. - Unité de fonction pneumatique (10, 10', 10", 10‴) selon la revendication 10 lorsque prise en dépendance de la revendication 9, dans laquelle l'élément de raclage (21) est porté par la partie de type jupe (15e) et placé sensiblement à l'extrémité libre de la partie de type jupe (15e).

12. - Unité de fonction pneumatique (10, 10', 10", 10‴) selon la revendication 10, dans laquelle l'élément de raclage (21) est porté par le corps de logement (11) sensiblement à l'ouverture d'insertion (13).

13. - Unité de fonction pneumatique (10, 10', 10", 10‴) selon l'une quelconque des revendications précédentes, l'unité de fonction pneumatique étant un raccord pneumatique (10), un collecteur pneumatique (10'), un distributeur pneumatique (10") ou un vérin pneumatique (10'").
